# EUROPEAN PATENT APPLICATION

(11) **EP 4 496 056 A2**
(43) Date of publication of application: **22.01.2025**
(21) Application number: 24186405.7
(22) Date of filing: 04.07.2024
(51) Int. Cl.: H01M 10/04, H01M 10/0587

(54) **ELECTRODE ASSEMBLY AND SECONDARY BATTERY INCLUDING THE SAME**

(30) Priority: 21.07.2023 KR 20230095520
(71) Applicant: Samsung SDI Co., Ltd, Gyeonggi-do 17084 (KR)
(72) Inventor: Lee, Dong Myung, 17084 Gyeonggi-do (KR); Ha, Jaehwan, 17084 Gyeonggi-do (KR); Kim, Duckhyun, 17084 Gyeonggi-do (KR); Yoo, Heeeun, 17084 Gyeonggi-do (KR)
(74) Representative: Michalski Hüttermann & Partner Patentanwälte mbB

(57) **Abstract**

A wound-type electrode assembly including a first electrode, a separator, and a second electrode, where the first electrode may include a substrate, an active material layer on at least one surface of the substrate, a first functional layer spaced apart from the active material layer by a predetermined distance and on the substrate, a finishing tape attached to an upper surface of the first functional layer, one surface of the substrate exposed between the active material layer and the first functional layer, and an upper surface of the active material layer.

## Description

### BACKGROUND

### 1. Field

Embodiments of the present invention relate to an electrode assembly, and, for example, to an electrode assembly for a secondary battery (which is a rechargeable battery), and a secondary battery including the electrode assembly.

### 2. Description of the Related Art

A secondary battery is a power storage system that converts electrical energy into chemical energy to store it with excellent energy density. Unlike a primary battery that is not designed to be recharged, because the secondary battery can be recharged, it is widely used in information technology (IT) devices such as a smartphone, a laptop computer, a tablet computer, and the like.

Recently, interest in electric cars has been increasing due to problems such as environment degradation and fossil fuel depletion, and such a secondary battery is used as a battery of electric vehicles.

According to such a trend, it is beneficial for the secondary battery to have characteristics such as high energy density, high power, high safety, etc.

Secondary batteries, however, have an increased risk of ignition, rupture, and explosion due to external shock and/or charging and discharging, so installation of suitable or appropriate safety devices is also beneficial.

In the case of a wound-type secondary battery, the ends are finished with tape, but the tape may be separated due to impact and/or the like, and as a result, the part wrapped with the tape may not be protected when damaged.

### SUMMARY

Embodiments of the present disclosure provide an electrode assembly and a secondary battery including the same capable of preventing or reducing damage of an electrode assembly caused by impact because a finishing tape is not separated, or is less likely to be separated, due to impact.

A wound-type electrode assembly includes a first electrode, a separator, and a second electrode, where the first electrode may include a substrate, an active material layer on at least one surface of the substrate, a first functional layer spaced apart from the active material layer by a set or predetermined distance and on the substrate, a finishing tape attached to an upper surface of the first functional layer, one surface of the substrate exposed between the active material layer and the first functional layer, and an upper surface of the active material layer.

The first functional layer may include a ceramic material.

The first electrode may further include a second functional layer between the substrate and the active material layer.

The second functional layer may extend outside the active material layer and be covered by the finishing tape.

The second functional layer may extend 1 mm to 5 mm outside the active material layer.

An interval between an end portion of the first functional layer and an end portion of a second functional layer may be 2 mm to 3 mm.

A length of the finishing tape may be 9 mm to 10 mm.

A width of the finishing tape may be greater than or equal to the width of the separator.

The electrode assembly may include a curved portion and a flat portion, and the finishing tape may be provided in the curved portion.

A secondary battery may include the electrode assembly as above, and a case accommodating the electrode assembly and electrolyte solution.

According to embodiments of the present disclosure, a finishing tape is attached to contact a substrate between end points, and therefore adherence of the finishing tape is increased such that the phenomenon of the finishing tape being separated due to impact may be reduced.

In addition, according to embodiments of the present disclosure, a finishing tape is on a curved portion that is relatively more vulnerable to impact, and therefore, the electrode assembly may be safely protected even if impact is applied.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIG. 1 is a schematic exploded perspective view of a secondary battery according to an embodiment.
FIG. 2 is a schematic transverse cross-sectional view of the electrode assembly of FIG. 1.
FIG. 3 includes top plan views and a cross-sectional view illustrating a first electrode of the electrode assembly shown in FIG. 2.
FIG. 4 includes top plan views and a cross-sectional view illustrating a second electrode of the electrode assembly shown in FIG. 2.

### DETAILED DESCRIPTION

Embodiments of the present disclosure will be described more fully hereinafter with reference to the accompanying drawings, in which example embodiments of the present disclosure are shown. As those skilled in the art would realize, the described embodiments may be modified in various different ways, all without departing from the scope of the present disclosure.

The drawings and description are to be regarded as illustrative in nature and not restrictive. Like reference numerals designate like elements throughout the specification. In addition, ordinal numbers such as "first", "second", and "third" are used to avoid confusion between components, and the present disclosure is not limited thereto.

Hereinafter, a secondary battery according to an embodiment will be described in more detail with reference to the accompanying drawings.

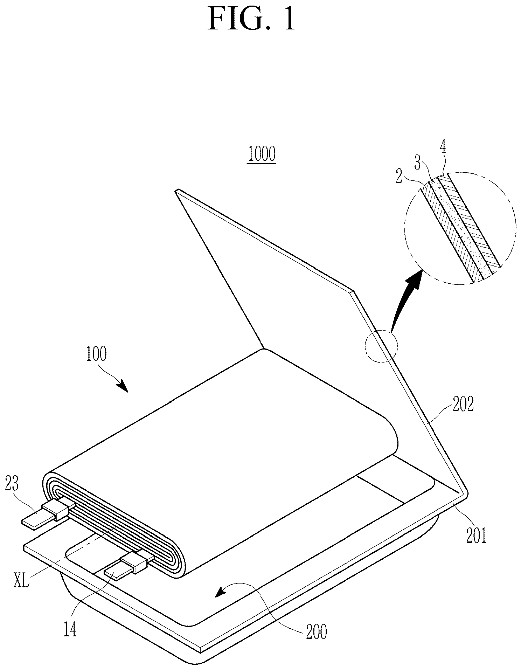

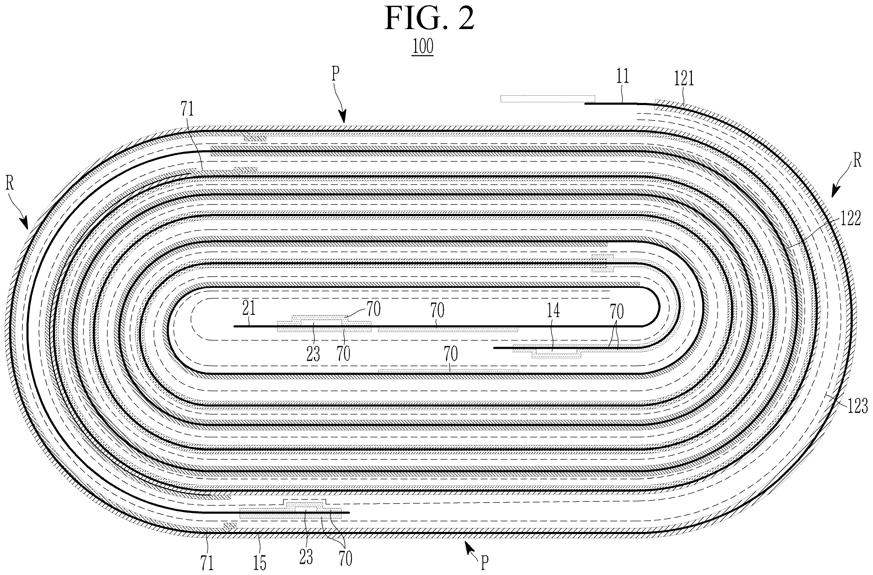

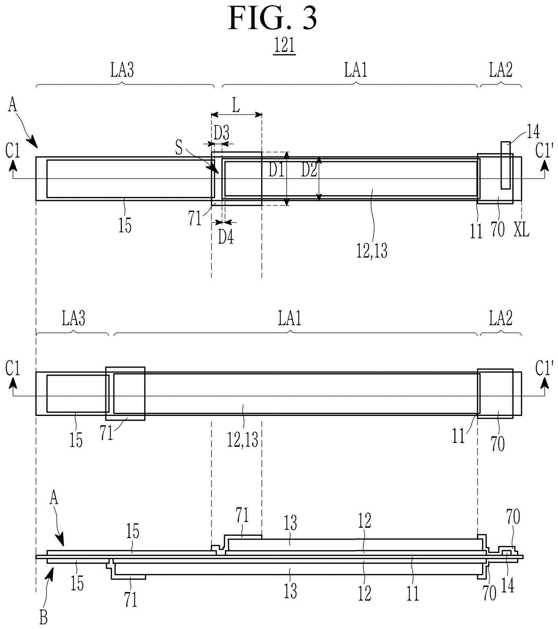

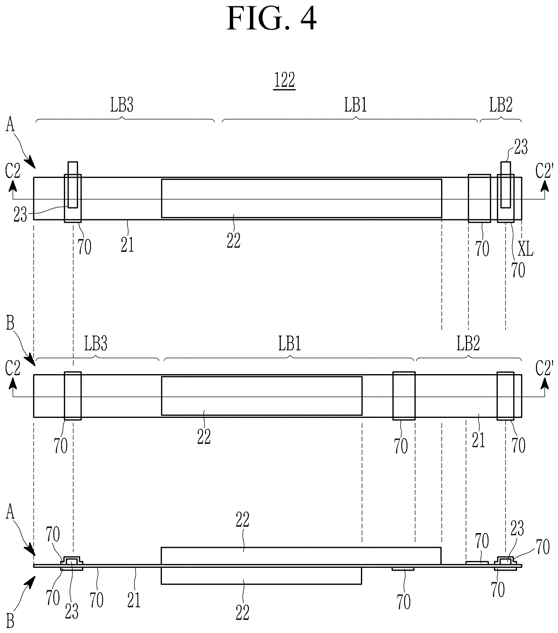

FIG. 1 is a schematic exploded perspective view of a secondary battery according to an embodiment. FIG. 2 is a schematic transverse cross-sectional view of the electrode assembly of FIG. 1. FIG. 3 includes top plan views and a cross-sectional view illustrating a first electrode of the electrode assembly shown in FIG. 2. FIG. 4 includes top plan views and a cross-sectional view illustrating a second electrode of the electrode assembly shown in FIG. 2.

In FIG. 3, top plan views are taken from one surface and another surface of first electrode, and the cross-sectional view is taken along line C1-C1' of FIG. 3. In FIG. 4, top plan views are taken from one surface and another surface of second electrode, and the cross-sectional view is taken along line C2-C2' of FIG. 4.

As shown in FIG. 1, a secondary battery 1000 according to an embodiment includes an electrode assembly 100 and a pouch 200.

Referring to FIG. 1 and FIG. 2, the electrode assembly 100 includes a first electrode 121, a second electrode 122, a separator 123 between the first electrode and the second electrode. The separator 123 is for insulation (e.g., electrical insulation), and may be stacked in the order of the first electrode 121, the separator 123, the second electrode 122, and the separator 123.

The electrode assembly 100 in which the first electrode 121, the separator 123, and the second electrode 122 are stacked may be in a jelly roll wound around a winding axis XL. If necessary or desired, the electrode assembly 100 may be wound and pressed flat, and a cross-section cut in a direction perpendicular (or substantially perpendicular) to the winding axis XL may have an elliptical shape that is long in one direction.

Accordingly, when viewed as a cross-section, the electrode assembly 100 includes a flat portion P that is relatively flat and a curved portion R that is relatively round. The flat portion may be a portion pressed after winding the electrode assembly 100, and the curved portion R may connect two opposing flat portions P. In the electrode assembly 100, one turn may include a pair of opposing flat portions and a pair of curved portions connected to ends of the flat portions.

In more detail, referring to FIG. 3 and FIG. 4, the first electrode 121 includes a first electrode active portion LA1, and a first electrode uncoated region LA2 and a first finishing portion LA3 provided at opposite sides of the first electrode active portion LA1, and the second electrode 122 includes a second electrode active portion LB1, and a second electrode uncoated region LB2 and a second finishing portion LB3 provided at opposite sides of the second electrode active portion LB1.

Hereinafter, when the band-shaped first and second electrodes are wound around the winding axis XL, the end adjacent to the winding axis XL is called a frontal end, and the end located relatively far away is called a distal end.

Referring to FIG. 3, the first electrode active portion LA1 includes a first substrate 11, a first functional layer 12 on the first substrate 11, and a first active material layer 13 on the first functional layer 12.

The first functional layer 12 and the first active material layer 13 are on one surface or both surfaces of the substrate, and the length of the first electrode active portion LA1 on a first surface A and a second surface B of the substrate 11 may be different. The first electrode uncoated region LA2 is provided at a frontal end of the first electrode 121, the surface of the first substrate 11 may be exposed because a separate material layer is not on the first substrate 11, and a first electrode tab 14 for drawing the current to the outside may be connected to the first substrate 11.

The first electrode tab 14 may be connected to the first electrode uncoated area LA2 by ultrasonic welding, laser welding, and/or resistance welding, and may protrude out of the first electrode uncoated area LA2. The first electrode tab 14 may include aluminum like the first substrate 11, and a thickness of the first electrode tab 14 may be 12 µm or less.

A protective tape 70 is attached to the first electrode tab 14 to protect the first electrode tab 14. The protective tape 70 is also on the second surface B of the substrate 11 on which the first electrode tab 14 is not provided, and may extend to cover an end portion of the first functional layer 12 and the first active material layer 13. At this time, the exposed substrate 11 between the first active material layer 13 and the first electrode tab 14 is covered to prevent short circuit with the second electrode 122 (or to reduce a likelihood or occurrence of such short circuit).

The first finishing portion LA3 is provided at the distal end of the first electrode 121, which is provided relatively far from the winding axis, and includes the first substrate 11 and a second functional layer 15 on the first substrate 11. The second functional layer 15 includes a ceramic material having insulating properties (e.g., electrically insulating properties), is spaced apart from one end of the first active material layer 13 by a set or predetermined distance, and is provided in the first finishing portion LA3. It may be relatively longer than the first finishing portion on the first surface A on the second surface B of the first substrate 11, and the first finishing portion LA3 of the second surface B may be wound around electrode assembly by at least one turn.

The second functional layer 15 is a material having a relatively larger resistance (e.g., electrical resistance) than the substrate 11, and because the second functional layer 15 is between substrates upon external impact, short circuit of the battery due to external impact may be prevented (or a likelihood or occurrence thereof is reduced).

The second functional layer 15 may include ceramic and binder.

The ceramic may include an endothermic ceramic such as pseudoboehmite, boehmite, and/or the like; a general ceramic such as aluminum oxide (AlO₃, Al₂O₃, and/or the like), silicon dioxide SiO₂, magnesium oxide (MgO), titanium dioxide (TiO₂), hafnium oxide HfO₂, tin oxide (SnO), cerium (IV) oxide (CeO₂), nickel oxide (NiO), zinc oxide (ZnO), calcium oxide (CaO), zirconium oxide (ZrO₂), yttrium oxide (Y₂O₃), silicon carbide (SiC), and/or the like; or a combination thereof.

The general ceramic is an insulating material (e.g., an electrically insulating material) having only an insulation property (e.g., has an electrically insulating property and not an endothermic property), and the endothermic ceramics is an endothermic material having an insulation property (e.g., an electrically insulating property) and an endothermic property.

The binder may include a non-water-soluble binder, a water-soluble binder, or a combination thereof.

The binder helps the materials in the ceramic layer adhere to each other and ensures that the ceramic layer adheres well to the substrate.

The non-water-soluble binder may be polyvinylchloride, carboxylated polyvinylchloride, polyvinyl fluoride, polymer including ethylene oxide, ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may include rubber-based binder and/or polymer resin binder. The rubber-based binder may be selected from styrene-butadiene rubber (SBR), acrylated styrene-butadiene rubber, acrylonitrile-butadiene rubber (ABR), acryl rubber, butyl rubber, fluorine rubber, and a combination thereof. The polymer resin binder may be selected from polyethylene oxide, polyvinylpyrrolidone, polyepichlorohydrin, polyphosphazene, polyacrylonitrile, ethylene propylene diene copolymer, polyvinylpyridine, chlorosulfonated polyethylene, latex, polyester resin, acryl resin, phenol resin, epoxy resin, polyvinyl alcohol and a combination thereof.

When a water-soluble binder is used as a binder, it may further include a cellulose-based compound that may provide or increase viscosity. As this cellulose-based compound, one or more types (or kinds) of carboxymethyl cellulose, hydroxypropylmethyl cellulose, methyl cellulose, and/or alkali metal salts thereof may be used. Na, K, and/or Li may be used as the alkali metal.

The first substrate 11 provides a moving path of charges generated in the first active material layer 13, and support the first active material layer 13.

The first electrode 121 may be a positive electrode, and the first substrate 11 may have a highly conductive metal thin plate (e.g., a highly electrically conductive metal thin plate), for example, an aluminum foil and/or a mesh structure.

The first functional layer 12 may include a material containing a compound represented by [Formula 1] below, a compound represented by [Formula 2] below, or a combination thereof:

Formula 1 Liₐ₁M¹ₓ₁Fe₍₁₋ₓ₁₎PO₄.

In [Formula 1], 0.90 ≤ a1 ≤1.5, 0 ≤ x1 ≤ 0.4, and M¹ is Mg, Co, Ni or a combination thereof.

Formula 2 Liₐ₂Mnₓ₂Fe₍₁₋ₓ₂₎PO₄

In [Formula 2], 0.90 ≤ a2 ≤ 1.5, 0.1 ≤ x2 ≤ 1.

The compound represented by [Formula 1] may be a lithium iron phosphate compound. The mole fraction of lithium in [Formula 1] may be suitably or appropriately adjusted between approximately 0.9 and 1.5, and for example, it may be 0.90 ≤ a1 ≤ 1.2, or 0.95 ≤ a1 ≤ 1.1. In [Formula 1], Mn may be present in addition to Fe, and its mole fraction may be 0 ≤ x1 ≤ 0.7, 0 ≤ x1 ≤ 0.5, 0 ≤ x1 ≤ 0.3, 0 ≤ x1 ≤ 0.1 or 0 ≤ x1 ≤ 0.05.

The compound represented by [Formula 2] may be a lithium manganese iron phosphate compound. The mole fraction of lithium in [Formula 2] may be 0.90 ≤ a2 ≤1.2 or 0.95 ≤ a2 ≤1.1, similar to [Formula 1]. The mole fraction of manganese in [Formula 2] may be 0.2 ≤ x2 ≤ 0.9, 0.3 ≤ x2 ≤ 0.9, or 0.4 ≤ x2 ≤ 0.8, and, for example, when 0.5 ≤ x2 ≤ 0.9, lithium ion conducting capability is high.

For example, the first functional layer 12 is a lithium transition metal phosphate, and may include LiFePO₄, LiMn_{0.5}Fe_{0.5}PO₄, LiMnPO₄, and/or the like.

The first functional layer 12 may include the above materials, and may further include a binder and/or a conductive material (e.g., an electrically conductive material). Here, the content of the material may be 80 wt% to 97 wt% based on the total weight of the first functional layer 12, the content of the binder may be 1 wt% to 10 wt%, and the content of the conductive material may be 0.5 wt% to 10 wt%.

The binder may well adhere the material particles in the first functional layer to each other and the material particles to the substrate, and the binder may include a non-water-soluble binder, a water-soluble binder, or a combination thereof.

The non-water-soluble binder may include polyvinylchloride, carboxylated polyvinylchloride, polyvinyl fluoride, polymer including ethylene oxide, ethylene propylene copolymer, polystyrene, polyvinylpyrrolidone, polyurethane, polytetrafluoroethylene, polyvinylidene fluoride, polyethylene, polypropylene, polyamideimide, polyimide or a combination thereof.

The water-soluble binder may include rubber-based binder and/or polymer resin binder. The rubber-based binder may be selected from styrene-butadiene rubber (SBR), acrylated styrene-butadiene rubber, acrylonitrile-butadiene rubber (ABR), acryl rubber, butyl rubber, fluorine rubber, and a combination thereof. The polymer resin binder may be selected from polyethylene oxide, polyvinylpyrrolidone, polyepichlorohydrin, polyphosphazene, polyacrylonitrile, ethylene propylene diene copolymer, polyvinylpyridine, chlorosulfonated polyethylene, latex, polyester resin, acryl resin, phenol resin, epoxy resin, polyvinyl alcohol and a combination thereof.

When a water-soluble binder is used as a binder, it may further include a cellulose-based compound that may provide or increase viscosity. As this cellulose-based compound, one or more types (or kinds) of carboxymethyl cellulose, hydroxypropylmethyl cellulose, methyl cellulose, and/or alkali metal salts thereof may be used. Na, K, and/or Li may be used as the alkali metal.

The conductive material is used to provide conductivity (e.g., electrical conductivity) to an electrode, and the conductive material may include a carbon-based material, a metal-based material, a conductive polymer (e.g., an electrically conductive polymer), or a mixture thereof.

The conductive material included in the first functional layer 12 may be any suitable electronically conductive material that does not cause chemical changes (e.g., undesirable chemical changes) in a battery containing it. For example, a conductive material (e.g., an electrically conductive material) including a carbon-based material such as natural graphite, artificial graphite, carbon black, acetylene black, Ketjen black, carbon fiber, and/or the like; a metal-based material containing copper, nickel, aluminum, silver, and/or the like and in the form of metal powder and/or metal fiber; a conductive polymer such as polyphenylene derivative, and/or the like; or a mixture thereof may be used.

The first active material layer 13 may be formed by dispersing an electrode active mass including an electrode active material, a binder, a conductor (e.g., an electrical conductor), and the like in a solvent to form a slurry, applying it to at least one surface of the first substrate 11, and drying and compressing it.

The first active material layer 13 includes a positive electrode active material, and a compound capable of reversible intercalation and deintercalation of lithium (lithiated intercalation compound) may be used as the positive active material.

Examples of positive electrode active materials include compounds represented by any of the following chemical formulas:

LiₐA_{1-b}X_{b}D₂ (0.90 ≤ a ≤ 1.8, 0 ≤ b ≤ 0.5);

LiₐA_{1-b}X_{b}O_{2-c}D_{c} (0.90 ≤ a ≤ 1.8, 0 ≤ b ≤ 0.5, 0 ≤ c ≤ 0.05);

LiₐE_{1-b}X_{b}O_{2-c}D_{c} (0.90 ≤ a ≤ 1.8, 0 ≤ b ≤ 0.5, 0 ≤ c ≤ 0.05);

LiₐE_{2-b}X_{b}O_{4-c}D_{c} (0.90 ≤ a ≤ 1.8, 0 ≤ b ≤ 0.5, 0 ≤ c ≤ 0.05);

LiₐNi_{1-b-c}Co_{b}X_{c}Dₐ (0.90≤ a ≤1.8, 0 ≤ b ≤ 0.5, 0 ≤ c ≤ 0.5, 0 < α ≤ 2);

LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 < α < 2);

LiₐNi_{1-b-c}CO_{b}X_{c}O_{2-α}T₂ (0.90 ≤ a ≤ 1.8, 0 ≤ b ≤ 0.5, 0 ≤ c ≤ 0.05, 0 < α < 2);

LiₐNi_{1-b-c}Mn_{b}X_{c}D_{α} (0.90 ≤ a ≤ 1.8, 0 ≤ b ≤ 0.5, 0 ≤ c ≤ 0.05, 0 < α ≤ 2);

LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < α < 2);

LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 < α < 2);

LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1);

LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1);

LiₐNiG_{b}O₂ (0.90 ≤ a ≤ 1.8, 0.001 ≤ b ≤ 0.1);

LiₐCoG_{b}O₂ (0.90 ≤ a ≤ 1.8, 0.001 ≤ b ≤ 0.1);

LiₐMn_{1-b}G_{b}O₂ (0.90 ≤ a ≤ 1.8, 0.001 ≤ b ≤ 0.1);

LiₐMn₂G_{b}O₄ (0.90 ≤ a ≤ 1.8, 0.001 ≤ b ≤ 0.1);

LiₐMn_{1-g}G_{g}PO₄ (0.90 ≤ a ≤ 1.8, 0 ≤ g ≤ 0.5);

QO₂; QS₂; LiQS₂;

V₂O₅; LiV₂O₅;

LiZO₂;

LiNiVO₄;

Li _{(3-f)}J₂ PO₄₃ (0 ≤ f ≤ 2);

Li _{(3-f)}Fe₂ PO₄₃ (0 ≤ f ≤ 2); and

LiₐFePO₄ (0.90 ≤ a ≤ 1.8).

In the above formulas, A is selected from the group consisting of Ni, Co, Mn, and a combination thereof; X is selected from the group consisting of Al, Ni, Co, Mn, Cr, Fe, Mg, Sr, V, rare earth element and a combination thereof; D is selected from the group consisting of O, F, S, P, and a combination thereof; E is selected from the group consisting of Co, Mn, and a combination thereof; T is selected from the group consisting of F, S, P, and a combination thereof; G is selected from the group consisting of Al, Cr, Mn, Fe, Mg, La, Ce, Sr, V, and a combination thereof; Q is selected from the group consisting of Ti, Mo, Mn, and a combination thereof; Z is selected from the group consisting of Cr, V, Fe, Sc, Y, and a combination thereof; and J is selected from the group consisting of V, Cr, Mn, Co, Ni, Cu, and a combination thereof.

In some embodiments, the compound having a coating layer on its surface may be used, or a mixture of the above compound and a compound having a coating layer may be used. This coating layer may include at least one coating element compound selected from the group consisting of oxides of coating elements, hydroxides of coating elements, oxyhydroxides of coating elements, oxycarbonates of coating elements, and hydroxycarbonates of coating elements. The compounds forming these coating layers may be amorphous and/or crystalline. Coating elements included in the coating layer include Mg, Al, Co, K, Na, Ca, Si, Ti, V, Sn, Ge, Ga, B, As, Zr, or a combination thereof. The coating layer forming process may use a method that does not adversely affect the active material properties of the active material layer, such as spray coating and/or dipping.

An example of the positive electrode active material may include a positive electrode active material represented by the following [Formula A1]:

Formula A1 Liₐ₁₁Niₓ₁₁M¹¹_{y11}M¹²_{1-x11-y12}O₂

In [Formula A1],
0.9≤a11≤1.8, 0.3≤x11≤1, 0≤y11≤0.7,

M¹¹ and M¹² is selected from each independently Al, B, Ce, Co, Cr, F, Mg, Mn, Mo, Nb, P, S, Si, Sr, Ti, V, W, Zr and a combination thereof.

In [Formula A1], it may be 0.4≤x11≤1 and 0≤y11≤0.6, and it may be 0.5≤x11≤1 and 0≤y11≤0.5, or 0.6≤x11≤1 and 0≤y11≤0.4, or 0.7≤x11≤1 and 0≤y11≤0.3, or 0.8≤x11≤1 and 0≤y11≤0.2, or 0.9≤x11≤1 and 0≤y11≤0.1.

An example of the positive active material may include a lithium nickel cobalt composite oxide represented by the following [Formula A2].

Formula A2 Liₐ₁₂Niₓ₁₂Co_{y12}M¹³_{1-x12-y12}O₂

In [Formula A2], 0.9≤a12≤1.8, 0.3≤x12<1, 0<y12≤0.7, and M¹³ is selected from Al, B, Ce, Cr, F, Mg, Mn, Mo, Nb, P, S, Si, Sr, Ti, V, W, Zr and a combination thereof.

In [Formula A2], it may be 0.3≤x12≤0.99 and 0.01≤y12≤0.7, and it may be 0.4≤x12≤0.99 and 0.01≤y12≤0.6, 0.5≤x12≤0.99 and 0.01≤y12≤0.5, 0.6≤x12≤0.99 and 0.01≤y12≤0.4, 0.7≤x12≤0.99 and 0.01≤y12≤0.3, 0.8≤x12≤0.99 and 0.01≤y12≤0.2, or 0.9≤x12≤0.99 and 0.01≤y12≤0.1.

An example of the positive active material may include a lithium nickel cobalt composite oxide represented by the following [Formula A3],

Formula A3 Liₐ₁₃Niₓ₁₃CO_{y13}M¹⁴_{z13}M¹⁵_{1-x13-y13-z13}O₂

In [Formula A3], 0.9≤a13≤1.8, 0.3≤x13≤0.98, 0.01≤y13≤0.69, 0.01≤z13≤0.69, M¹⁴ is selected from Al, Mn and a combination thereof, and M¹⁵ is selected from B, Ce, Cr, F, Mg, Mo, Nb, P, S, Si, Sr, Ti, V, W, Zr and a combination thereof.

In [Formula A3], it may be 0.4≤x13≤0.98, 0.01≤y13≤0.59, and 0.01≤z13≤0.59, and it may be 0.5≤x13≤0.98, 0.01≤y13≤0.49, and 0.01≤z13≤0.49, or 0.6≤x13≤0.98, 0.01≤y13≤0.39, and 0.01≤z13≤0.39, or 0.7≤x13≤0.98, 0.01≤y13≤0.29, and 0.01≤z13≤0.29, or 0.8≤x13≤0.98, 0.01≤y13≤0.19, and 0.01≤z13≤0.19, or 0.9≤x13≤0.98, 0.01≤y13≤0.09, and 0.01≤z13≤0.09.

The first active material layer 13 includes the positive electrode active material and may further include a binder and/or a conductive material (e.g., an electrically conductive material). Here, the content of the positive active material may be 90 wt% to 98 wt% based on the total weight of the positive active material layer, and for example, it may be 90 wt% to 95 wt%. The content of the binder and conductive material may be each 1 wt% to 5 wt% based on the total weight of the positive active material layer.

The binder may well adhere the positive active material particles to each other, and the positive active material to the functional layer or the substrate, similarly to the binder constituting the first functional layer 12.

The conductive material is used to provide conductivity (e.g., electrical conductivity) to an electrode, and is the same as the conductive material constituting the first functional layer 12.

In some embodiments, an end portion of the first active material layer 13 and an end portion of the second functional layer 15 may be covered with a finishing tape 71. At this time, the end portion includes a portion of an upper surface connected to an insulated surface (e.g., an electrically insulated surface), a cut surface of the second functional layer 15 and the first active material layer 13. A width D1 of the finishing tape 71 may be wider than a width D2 of the substrate 11, and may greater than or equal to the width of separator.

An end portion of the first functional layer 12 and the end portion of the second functional layer 15 may be spaced apart by a set or predetermined distance, and at this time, a width D3 of the first substrate 11 exposed therebetween is generally 3 mm to 7 mm. The finishing tape 71 covers and protects all of the end portion of the first active material layer 13, the end portion of the second functional layer 15 and an upper surface S of the exposed substrate 11, and an entire length L of the finishing tape 71 may be 5 mm to 20 mm. The entire length L of the finishing tape 71 is not a straight-line distance indicated in the drawing, but is an entire covering length that includes the stepped end portion shown in FIG. 3.

The finishing tape 71 extends from the end portion of the first active material layer 13, to cover and protect the end portion of the second functional layer 15, together. Therefore, the finishing tape 71 is attached to an upper surface of the first substrate 11 exposed between the end portion of the first active material layer 13 and the end portion of the second functional layer 15.

The first functional layer 12 extends outside the first active material layer 13, such that an interval D3 between the end portion of the first functional layer 12 and the end portion of the second functional layer 15 is narrower than an interval between the first active material layer 13 and the second functional layer 15. Therefore, the first functional layer 12 and the first active material layer 13 may form a stepped structure. The finishing tape 71 also covers and protects the end portion of the first functional layer 12 provided and exposed below the first active material layer 13. At this time, a width D4 of a first functional layer 13 extending outside the first active material layer 13 may be 1 mm to 5 mm.

The finishing tape 71 according to an embodiment is attached to and contacts an upper surface of the exposed substrate 11, adherence increases as the area where the finishing tape 71 is attached increases. Therefore, it is possible to prevent the end portion of the first active material layer 13 and the end portion of the second functional layer from being exposed without being protected as the finishing tape 71 is separated (or to reduce a likelihood of the end portion of the first active material layer 13 and the end portion of the second functional layer being exposed without being protected as the finishing tape 71 is separated).

In some embodiments, the finishing tape 71 according to an embodiment may cover and protect the entire curved portion R of the electrode assembly shown in FIG. 2. If the attached tape comes off, the curved portion may be more easily damaged than the flat portion, but in one embodiment, the adhesive force is increased to not only to prevent the tape from coming off (or to reduce a likelihood of the tape coming off), but also to cover and protect the curved portion R.

In addition, different substrates may possibly contact due to contraction of the separator due to the heat generated during charge and discharge, thereby causing a short circuit (a short) and resulting in fire from ignition, but in an embodiment, the region of possible short circuit is covered by the finishing tape to reduce the possibility of a short circuit and ignition.

Referring to FIG. 4, the second electrode active portion LB1 includes a second substrate 21 and a second active material layer 22 on the second substrate 21.

The second active material layer 22 may be on one surface or both surfaces of the substrate, and a length of the second electrode active portion LB1 on the first surface A and the second surface B of the substrate 21 may be different from each other.

The second electrode uncoated region LB2 may be provided at the frontal end and distal end of the second electrode, respectively, and because a separate material layer is not on the second substrate 21, the surface of the second substrate 21 may be exposed and a second electrode tab 23 to draw the current to the outside may be connected.

The second electrode tab 23 may be connected to the second electrode uncoated area LB2 by ultrasonic welding, laser welding, and/or resistance welding, and may protrude out of the second electrode uncoated area LB2. The second electrode tab 23 may be made of nickel.

The protective tape 70 is on the second electrode tab 23, and the protective tape 70 may also be on the second surface B of the substrate 21 on which the second electrode tab 23 is not formed. The protective tape 70 may prevent short circuits (or reduce a likelihood or occurrence thereof) by being also attached to areas where substrates of different polarities may come into contact in a wound state.

The second substrate 21 provides a moving path of charges generated in the second active material layer 22, and supports the second active material layer 22.

The second electrode 122 may be a negative electrode, and the second substrate 21 may have a highly conductive metal thin plate (e.g., a highly electrically conductive metal thin plate), for example, may have a structure of a copper foil and/or a nickel foil and/or mesh. The second active material layer 22 may be formed by dispersing an electrode active mass including an electrode active material, a binder, a conductor, and the like in a solvent to form a slurry, applying it to at least one surface of the second substrate 21, and drying and compressing it.

As the negative active material of the second active material layer 22, a substance capable of reversible intercalation and deintercalation of lithium, lithium metal, an alloy of a lithium metal, a material capable of doping and dedoping lithium and/or transition metal oxide may be used.

As a substance capable of reversible intercalation and deintercalation of lithium, a carbon material, e.g., a carbon-based negative active material generally used in a lithium secondary battery may be an example. As a representative example of the carbon-based negative active material, crystalline carbon, amorphous carbon, or all of them together may be used. As an example of the crystalline carbon, graphite such as natural graphite and/or artificial graphite of amorphous, plate shape, flake, spherical shape, and/or fiber-type may be used, and as an example of the amorphous carbon, soft carbon and/or hard carbon, mesophase pitch carbide, calcined coke, and/or the like may be used.

As the alloy of a lithium metal, an alloy of lithium and metal selected from the group consisting of Na, K, Rb, Cs, Fr, Be, Mg, Ca, Sr, Si, Sb, Pb, In, Zn, Ba, Ra, Ge, Al and Sn may be used.

As the material capable of doping and dedoping lithium, Si, SiOₓ (0 < x < 2), Si-Q alloy (here, Q is an element selected from the group consisting of alkali metal, alkaline-earth metal, group 13 elements, group 14 elements, group 15 elements, group 16 elements, transition metal, rare earth element and a combination thereof, and is not Si), Si-carbon composite, Sn, SnO₂, Sn-R (here, R is an element selected from the group consisting of alkali metal, alkaline-earth metal, group 13 elements, group 14 elements, group 15 elements, group 16 elements, transition metal, rare earth element and a combination thereof, and is not Sn), Sn-carbon composite, and/or the like may be used, and at least one of these may be mixed together with SiO₂ and used. As the element Q and R, one selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof may be used.

As the transition metal oxide, lithium titanium oxide may be used.

Referring to FIG. 1 and 2, the separator 3 is between the first electrode 2 and the second electrode 4, and prevents short circuit therebetween (or reduces a likelihood or occurrence of such a short circuit).

The separator 123 may be include a porous film having high ion permeability and mechanical strength. For example, it may be include an olefin-based polymer such as polyethylene and/or polypropylene. The separator is extends more along a longitudinal direction or along a width direction than the first electrode active region LA1 or the second electrode active region LB1, thus it is possible to prevent a short circuit between the first electrode active region LA1 and the second electrode active region LB1 due to thermal contraction (or to reduce a likelihood or occurrence of such a short circuit).

Referring back to FIG. 1, the electrode assembly 100 may be contained in the pouch-type case 200 together with the electrolyte. The pouch-type case may include a laminated exterior material, the exterior material includes a lower exterior material 201 and an upper exterior material 202, and the electrode assembly 100 is placed between them and then sealed by heat fusion.

The laminated exterior material may have a multi-layer structure having, for example, a first insulation layer 2, a metal layer 3 and a second insulation layer 4. Of course, various other adhesive layers or functional layers may be added.

The first insulation layer 2 is an inner side surface of the laminated exterior material, and includes a material having an insulating property (e.g., an electrically insulating property) and thermally adhesive properties, such that it may be sealed by heat fusion while the electrode assembly 100 is accommodated. In addition, the first insulation layer 2 is provided at one surface of the metal layer 3, and provides the inner side surface of the laminated exterior material facing the electrode assembly 100. The first insulation layer 2 may include casted polypropylene (CPP) and/or its equivalents, which does not react with electrolyte solution.

While the subject matter of this disclosure has been described in connection with what is presently considered to be practical example embodiments, it is to be understood that the present disclosure is not limited to the disclosed embodiments, but, on the contrary, is intended to cover various modifications and equivalent arrangements included within the scope of the appended claims, and equivalents.

**Description of some of the symbols**

| | | | |
|---|---|---|---|
| 11: | first substrate | 12: | first functional layer |
| 13: | first active material layer | 14: | first electrode tab |
| 15: | second functional layer | 21: | second substrate |
| 22: | second active material layer | 23: | second electrode tab |
| 70: | protective tape | 71: | finishing tape |
| 100: | electrode assembly | 121: | first electrode |
| 122: | second electrode | 200: | pouch |
| 201: | lower exterior material | 202: | upper exterior material |
| 1000: | secondary battery | 123: | separator |
| 2: | first insulation layer | 3: | metal layer |
| 4: | second insulation layer | | |

## Claims

1. A wound-type electrode assembly (100) comprising a first electrode (121), a separator (123), and a second electrode (122), wherein the first electrode (121) comprises:
a substrate (11);
an active material layer (13) on at least one surface of the substrate (11);
a first functional layer (12) spaced apart from the active material layer (13) by a predetermined distance and on the substrate (11);
a finishing tape (71) attached to an upper surface of the first functional layer (12), one surface of the substrate (11) exposed between the active material layer (13) and the first functional layer (12), and an upper surface of the active material layer (13).

2. The electrode assembly (100) of claim 1, wherein the first functional layer (12) comprises a ceramic material.

3. The electrode assembly (100) of claim 1 or 2, further comprising a second functional layer (15) between the substrate (11) and the active material layer (13).

4. The electrode assembly (100) of claim 3, wherein the second functional layer (15) extends outside the active material layer (13) and is covered with the finishing tape (71).

5. The electrode assembly (100) of claims 3 or 4, wherein the second functional layer (15) extends 1 mm to 5 mm outside the active material layer (13).

6. The electrode assembly (100) of claims 1 to 5, wherein an interval between an end portion of the first functional layer (12) and an end portion of a second functional layer (15) is 2 mm to 3 mm.

7. The electrode assembly (100) of claims 1 to 6, wherein a length of the finishing tape (71) is 9 mm to 10 mm.

8. The electrode assembly (100) of claims 1 to 7, wherein a width of the finishing tape (71) is greater than or equal to the width of the separator (123).

9. The electrode assembly (100) of claims 1 to 8, wherein:
the electrode assembly (100) comprises a curved portion and a flat portion; and
the finishing tape (71) is provided in the curved portion.

10. The electrode assembly (100) of claims 1 to 9, wherein, in a state in which the electrode assembly (100) is wound, the finishing tape (71) is provided at both sides of an electrode uncoated region provided at a distal end of the second electrode (122).

11. A secondary battery, comprising:
the electrode assembly (100) of claims 1 to 10; and
a case accommodating the electrode assembly (100) and electrolyte solution.
